(19) **Europäisches Patentamt**
**European Patent Office**
**Office européen des brevets**

(11) Publication number : **0 252 938 B1**

(12) # EUROPEAN PATENT SPECIFICATION

(45) Date of publication of patent specification :
27.02.91 Bulletin 91/09

(51) Int. Cl.⁵ : **B03B 4/00, B03B 9/06,
B07B 13/16**

(21) Application number : 87900337.4

(22) Date of filing : 29.12.86

(86) International application number :
PCT/SE86/00585

(87) International publication number :
WO 87/04087 16.07.87 Gazette 87/15

(54) **AN ARRANGEMENT FOR THE SEPARATION OF WASTE MATERIALS.**

(30) Priority : 30.12.85 SE 8506162

(43) Date of publication of application :
20.01.88 Bulletin 88/03

(45) Publication of the grant of the patent :
27.02.91 Bulletin 91/09

(84) Designated Contracting States :
AT BE CH DE FR GB IT LI LU NL SE

(56) References cited :
EP-A- 013 783
DE-A- 387 133
DE-A- 1 249 782

(56) References cited :
DE-A- 1 757 023
SCHUBERT; H "AUFBEREITUNG FESTER
MINERALISCHER ROHSTOFFE", vol. I,
LEIP216 1968, p. 189, lines 15-16

(73) Proprietor : **Waste Management Sverige AB
Post Box 19605
S-104 32 Stockholm (SE)**

(72) Inventor : **FORSLUND, Elmar
Kalle Flygares väg 2
S-130 35 Ingaro (SE)**

(74) Representative : **Magnusson, Gustav
MAGNUPATENT Gustav Magnusson AB P.O.
Box 6207
S-200 11 Malmö 6 (SE)**

Jouve, 18, rue Saint-Denis, 75001 PARIS

## Description

The present invention relates to an arrangement for the separation of waste materials in accordance with the preamble of claim 1.

Previously known separating plants for waste, e.g. domestic waste, exist where the waste is fed to a separating arrangement, e.g. a separating table, which divides up the heavy and/or rigid constituents of the waste, e.g. fragments of glass, rigid plastics, wood, rubber, metal into a first fraction and the light and/or flexible constituents, e.g. newspapers, sheets of corrugated board, plastic film, textiles, into a second fraction. GB-A-1 597 442 describes a technique for such a separation and relates to an arrangement comprising a separating table which is oriented at a slope in relation to the horizontal plane. The table, whilst maintaining a sloping main direction, describes a circular rotating movement, whereby constituents belonging to the first fraction move towards the lower part of the table, where they leave the table, and constituents belonging to the second fraction move towards the upper art of the table, where they leave the table. DE-B-1 249 782 describes a simplar technique and relates to a vibration sieve arrangement comprising grid elements for separating waste materials.

In plants of the abovementioned type the waste which is to be divided into the two fractions generally is subjected to a breaking up, e.g. by means of a hammer mill, before the waste material is fed to the separating table. In such a breaking up any fragile goods present in the waste are demolished and it is not possible, therefore, to be able to reuse such goods e.g. of the bottle type.

It is a disadvantage of the arrangements previously known and described above that the separating procedure is relatively slow, since all the goods which are to be divided into the two fractions are charged into a limited area of the lower part of the separating table, from where constituents belonging to the different fractions move either downwards or upwards along the table. Limitations of the receiving area of the separating table reduce the magnitude of the flow of goods to the separating table, since in case of excessive thickness of the layer of goods which is to be divided into the two fractions, the separating function is jeopardized, since for the goods collected only inadequate division into both fractions is achieved. In, and in the vicinity of, the area where the goods are charged onto the separating table, the constituents of the two fractions are mixed, which implies that the material flows for the fractions are oppositely directed and this in turn means that constituents (types of materials) belonging to different fractions obstruct each other in their respective movement in the intended direction. It frequently occurs that types of material belonging to the second fraction, e.g. paper such as newspaper, but also to some extent pieces of plastic film, accompany items belonging to the first fraction right down to the lower part of the table and leave the table there instead of, as they are intended, at the upper end of the table. It is very desirable, therefore, to increase the sorting capacity of a table of the above design. In the field of the recovery of glass, glass material to be recycled commands a different price depending on the colour of the glass. The highest price is paid for clear, that is to say colourless, glass, whilst the price for coloured glass is lower. However, in respect of coloured glass, the price level is higher for batches of glass consisting of single-coloured glass than for batches made up of glass of different colours.

The steadily increasing quantity of waste materials as time goes on constitutes a growing problem with regard to the possibility of depositing the waste. Insufficient reuse of the waste moreover implies squandering of natural resources and also of the energy inherent in the waste materials. Many of the products which are included in the waste, such as metals and in particular aluminium, glass and, to a certain extent, paper products require large amounts of energy in their manufacture and/or have a large energy content. It is of great value, therefore, that materials should be recovered. Because of high labour costs and difficulties in separating the waste into its constituents the degree of waste recovery continues to be too low. Any measure or any technique apt to allow the degree of recovery to be increased is of greater value, therefore, than might be perceivable at a first glance.

One problem in the recovery of e.g. domestic waste is that it is composed of such a large quantity of different materials and residual products that a worthwile sorting into constituents for subsequent reclamation may appear impossible. The problem is particularly complex when the waste contains both so-called "wet" waste and "dry" waste, since the wet waste makes a mechanical division of the same more difficult. Even a purely manual dividing of the waste is made harder when "wet" waste is included in the waste. It is desirable, moreover, in order to facilitate the sorting, and especially in the case of manual sorting, that small constituents should be separated mechanically, so that the manual picking out for the division of the waste into sorting groups, based e.g. on types of materials, for recycling etc is made easier.

The resent invention relates to an arrangement which brings/about an improved capacity together with improved reliability in the sorting of the materials charged into the two abovementioned fractions and which at the same time meet the abovementioned requirement that the waste should be sorted into different material groups and/or groups adapted to a special technique for a recycling of the material.

The invention is based on a combination of mechanical sorting and manual sorting. It is the object of the invention to render the mechanical sorting more effective so as to diminish thereby the sorting costs and, if necessary, facilitate the subsequent manual sorting out of the fractions formed into types of material through mechanical sorting of the waste.

This task is solved by an arrangement defined in the characterizing clause of claim 1.

In an arrangement according to the invention the waste is separated into at least two fractions, one fraction containing rigid plastics, pieces of wood, relatively rigid packages, glass bottles ect., and one fraction containing goods which are relatively elastic and flexible, such as e.g. newspapers, corrugated boards, plastic films, textiles etc. During the course of separation glass bottles which are undamaged when charged to the separating arrangement remains also undamaged when they leave the arrangement.

In accordance with the invention a presorting or preseparation takes place by the feeder of the material charged to the separating table, as a large part of the goods forming the first fraction fall down on the lower part of the table and a large part of the goods forming the second fraction fall down on the upper part of the table. As a result thereof the material is spread over a greater surface. Due to this spread of goods and presorting thereof the main part of the opposedly directed material flows for the fractions mentioned above are avoided and consequently is avoided that opposedly directed flows obstruct the movement of the material.

In a preferred embodiment of the invention the width of the gaps is greater adjoining the termination of the output part than in the region nearest to the input part of the feeder.

In a fruther preferred embodiment the separating table is provided in the region below the piners of the feeder with shock-absorbing material in order the prevent fragile goods, e.g. glass bottles, from being damaged on impact with the separating table.

The dependent claims describe further appropriate embodiments of the invention.

The invention is described in more detail below with reference to the drawing, wherein

Fig 1 shows a schematic side view of an arrangement in accordance with the invention,

Fig 2 shows an outer end of a feeder in accordance with the invention seen from the top,

Figs 2a-c show, seen from the top, alternative embodiments of the output part of the feeder,

Figs 3 and 4 show axial sections through alternative embodiments of the output part of the feeder.

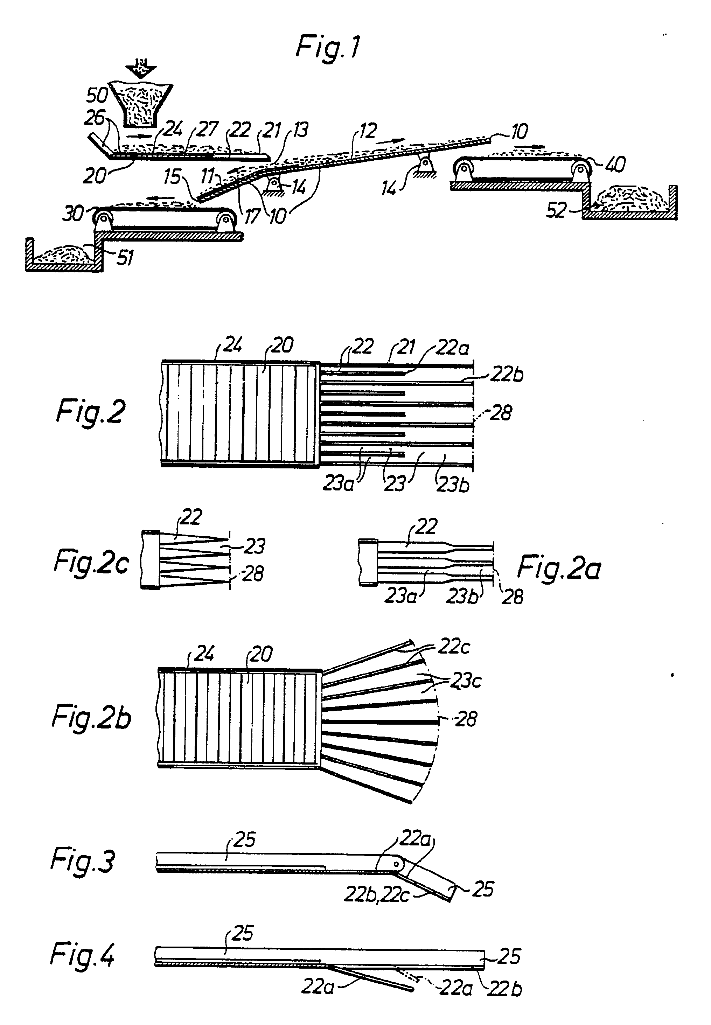

Figures 1 and 2 show a separating table 10 comprising a lower part 11 and an upper part 12. The upper part of the table forms a smaller angle with the horizontal plane than the lower part of the table. The transition between the upper part and the lower part of the table has the reference designation 13. The separating table is supported by bearing elements 14 which impart to the separating table a substantially circular movement in the vertical plane.

The separating table 10 is provided in the region below and close to a feeder 20 with a coating 17 of shock-absorbing material.

The feeder 20 is situated above and adjoins the separating tableand is designed as a table 24 whose upper surface has the reference designation 27. The feeder has an input part 26 and an output part 21 provided with fingers 22 which are oriented in the longitudinal direction of the feeder, that is to say in the direction of movement of the goods which pass the feeder. Between the fingers are located gaps 23. The distance between the fingers is chosen so that the size of the gaps corresponds to the dimensions of the goods which are to be permitted to pass through the gaps. The goods are charged onto the feeder 20 via a charging hopper 50. In certain applications the table is arranged to be slightly inclined (maximum approx. 10°) in the direction of movement of the goods.

In Fig. 2 is shown a special embodiment of the feeder 20 wherein it is provided with short fingers 22a and with long fingers 22b. The short fingers are placed between the long fingers connected to the attachment of the fingers onto the table 24 of the feeder 20. Thus closest to the attachment gaps 23a of a smaller width are formed than that of the gaps 23b which are located between the long fingers 22b. In certain applications free ends of the fingers are arranged at a distance from the attachments which means that a line of connection 28 between the free ends is arc-shaped, the central part of the arc as a rule being located farthest in over the separating table, reckoned in the direction of movement of the goods. As a result a further spreading of the goods along the separating table along its central part is obtained which reduces the material thickness of the goods entrained which in turn increases the effectiveness of the mechanical sorting.

Fig. 2a shows an alternative embodiment where corresponding effects with narrower gaps 23a closest to the attachment and broader gaps 23b in an outer region farther from the attachment are achieved in that the fingers are broader nearest to the attachment. In certain applications, see also Fig. 2c, this is achieved by a continuous tapering of the finger widths in the direction of movement of the goods. In the embodiment shown in Fig. 2a all the fingers are as a rule of the same length.

Fig. 2b shows yet another embodiment where the fingers 22c are arranged as a fan to form gaps 23c between them the width of the gaps increasing in the direction of the attachment of the fingers. As a rule the width of the fingers is the same along the whole length of the fingers which implies that the width of the gaps increases continuously in the direction of the movement of the goods. The embodiment shown in Fig. 2b is particularly suitable to be realized in the aforementioned form with an arc-shaped connecting line 28 between free ends of the fingers.

Figures 3 and 4 show embodiments where the fingers in a region farthest from the attachment are bent vertically downwards at an angle in relation to the direction of the finger nearest to the attachment. In certain applications the position of the angular bend is chosen so that the bend is laced at that art of the fingers where in accordance with the embodiments described in Fig. 2, 2a-c they form the narrow as between themselves, whereas in other embodiments the angular bend is placed in the region of the fingers where they form wider gaps between themselves.

In Fig. 4 embodiments are shown where only the short fingers are bent. The short fingers, bent along the whole of their length, are indicated by full lines, whereas embodiments where only the outermost parts of the short fingers are bent are marked by broken lines. It is evident that within the concept of the invention there is scope also for embodiments where all the fingers are of the same length. In such an embodiment too the outer part of the fingers may be bent at an angle. Reference numeral 25 indicates a vertical side wall which delimits the feeder in lateral direction so as to prevent goods from moving off the feeder along its edges.

Adjoining the lower part 11 of the separating table 10 is arranged a lower conveyor 30, illustrated in the Figure as a belt conveyor which in turn connects to a lower collecting element 51. Adjoining the upper part 12 of the separating table is arranged an upper conveyor 40 which in a preferred application is also realized as a belt conveyor. The upper conveyor co-operates with an upper collecting element 52 to which are taken the goods transferred by the conveyor.

The goods which are to be separated are taken via the charging hopper 50 to the feeder 20 where they form a layer which is moved by the feeder which, for example, may be of the shaking type, to the output end 21 of the feeder. In so doing the goods will pass over the region of the gaps 23, and those goods whose dimensions are smaller than the distance between fingers of the feeder will fall down between these onto the separating table 10. Since the separating table in this region is covered with a shock-absorbing material, bottles e.g. falling down will not be damaged on impact with the separating table. The remaining goods continue past the fingers and drop onto the separating table in a region mainly above the lower part 11.

Through movement of the separating table the goods belonging to the heavy fraction, that is to say the goods which are to be transferred to the lower end 15 of the separating table, will be moved along the separating table in the direction towards this end and will pass via the same to the lower conveyor 30, from where e.g. bottles when necessary are lifted off or are allowed to continue together with the remaining goods to the lower collecting element 51. Other goods are transferred towards the upper end of the separating table and towards the upper conveyor 40, whereafter they gradually pass the upper edge 16 and fall down onto the upper conveyor 40 which in turn transfers the goods to the upper receiving element 52. Here, as a rule, the belt 40 is also used for the picking out of certain goods e.g. paper, newspaper, plastic films etc.

Through the combination of the feeder 20 with the placing indicated in respect of the separating table 10 and by means of the gaps 23 on the feeder a sorting out is carried out already here of most of the small objects which after they have landed on the separating table 10 are moved by the same in a direction towards the lower end 15. By providing in certain embodiments gaps with an increasing width in the direction of movement of the goods, a greater spreading in the longitudinal and/or transverse direction of the region on the separating table to which goods are charged from the feeder is achieved. Since the goods which pass between the as of the greatest width as a rule consist of items of greater weight than the items which pass between the narrower gas these items are transferred towards the lower part 11 of the separating table through the rotating movements of the separating table even in the case of the transfer taking place against the direction of movement for material or constituents included in the fraction which is transferred towards the upper part 12 of the separating table.

The special design of the feeder 20 and its placing in relation to the separating table renders effective the sorting process and reduces the sojourn time of the goods on the separating table 10. Owing to the shock-absorbing material on the separating table the risk is minimized of fragile objects, e.g. glass bottles, which fall down being damaged on impact with the separating table and the arrangement consequently meets the express requirement that the largest possible number of bottles which accompany the waste material should be capable of being reused.

It is evident that in accordance with the concept of the invention a number of lower and/or upper conveyors 30 and 40 respectively may be arranged after one another to facilitate the manual picking out of recoverable and/or reusable goods in accordance with the above.

The separating table 10 may be provided with holes which are dimensioned so as to allow relatively small objects or particles to pass which means that during the passage of the goods along the separating table 10 in its longitudinal direction such goods fall down through the holes. Thus the effect aimed at is achieved, namely that the two fractions should be freed from the type of impurities which according to the technique applied previously hindered an effective manual sorting out of different types of material.

## Claims

1. An arrangement for the separation of waste materials of the type comprising particles of varying size, mechanical strength, density, elasticity etc., where the arrangement comprises a separating table (10) with a lower part (11) and an upper part (12) arranged at an angle to the horizontal plane, where the upper part forms a smaller angle with the horizontal plane than the lower part where the separating table as a whole or longitudinal segments in the same describe rotating movements but largely maintain the orientation in respect of the horizontal plane and where the arrangement comprises a feeder (20) adapted as a shaking table, **characterized** in that the feeder is provided in its output part (21) with fingers (22) oriented mainly in the direction of movement of the goods which between them form gaps (23), and that at least arts of the gas are located above the lower part (11) of the table, goods of dimensions smaller than the gap width passing the gaps and being charged to the lower part (11) and goods of dimensions greater than the gap width being charged to the upper part (12).

2. An arrangement in accordance with claim 1, **characterized** in that the width of the gaps is greater adjoining the termination of the output part (21) than in the region nearest to the input art (26) of the feeder.

3. An arrangement in accordance with claim 1 or 2, **characterized** in that the fingers (22) are arranged as short fingers (22a) and as long fingers (22b) and that the short fingers are placed between the long fingers (22b) in the region nearest to the input part (26) of the feeder.

4. An arrangement in accordance with anyone of the preceding claims, **characterized** in that in the region adjoining the termination of the output part (21) at least certain of the fingers (22) are directed at an angle in relation to the direction of the fingers and/or the direction of the table surface (27) of the feeder in the transition region between it and the fingers.

5. An arrangement in accordance with anyone of the preceding claims, **characterized** in that the separating table in the region below the fingers 22 of the feeder is provided with shock-absorbing material 17 so as to prevent fragile goods e.g. glass bottles, from being damaged on impact with the separating table.

6. An arrangement in accordance with anyone of the preceding claims, **characterized** in that the free ends of the long fingers (22) are located above the transition (13) between the lower part (11) and the upper part (12) of the table.

## Ansprüche

1. Anordnung zum Trennen von Abfallmaterialien des Typs, der Teilchen unterschiedlicher Größe, mechanischer Stärke, Dichte, Elastizität usw. aufweist, wobei die Anordnung einen Trenntisch (10) mit einem unteren Teil (11) und einem oberen Teil (12) aufweist, die in einem Winkel zur horizontalen Ebene angeordnet sind, wobei der obere Teil mit der horizontalen Ebene einen kleineren Winkel bildet als der untere Teil, wobei der Trenntisch als ganzes oder Längsabschnitte in demselben Drehbewegungen beschreiben, aber im wesentlichen doch die Orientierung in bezug auf die horizontale Ebene beibehalten und wobei die Anordnung eine Aufgabevorrichtung (20) aufweist, die als Rütteltisch ausgebildet ist, dadurch gekennzeichnet, daß die Aufgabevorrichtung an ihrem Ausgangsteil (21) mit Fingern (22) versehen ist, die in der Hauptsache in der Bewegungsrichtung der Artikel orientiert sind und die zwischen sich Zwischenräume (23) bilden, und daß wenigstens Teile der Zwischenräume oberhalb des unteren Teils (11) des Tisches angeordnet sind, wobei Artikel mit Abmessungen, die kleiner sind als die Zwischenraumbreite, durch die Zwischenräume hindurchgelangen und auf den unteren Teil (11) geladen werden und wobei Artikel mit Abmessungen, die größer sind als die Zwischenraumbreite, auf den oberen Teil (12) geladen werden.

2. Anordnung nach Anspruch 1, dadurch gekennzeichnet, daß die Breite der Zwischenräume in der Nähe des Endes des Ausgangsteils (21) größer ist als in dem Bereich, der dem Eingangsteil (26) der Aufgabevorrichtung am nächsten ist.

3. Anordnung nach Anspruch 1 oder 2, dadurch gekennzeichnet, daß die Finger (22) als kurze Finger (22a) und als lange Finger (22b) angeordnet sind und daß die kurzen Finger zwischen den langen Fingern (22b) in dem Bereich angeordnet sind, der dem Eingangsteil (26) der Aufgabevorrichtung am nächsten ist.

4. Anordnung nach einem der vorangehenden Ansprüche, dadurch gekennzeichnet, daß in dem Bereich, der an das Ende des Ausgangsteils (21) angrenzt, wenigstens einige der Finger (22) in bezug auf die Richtung der Finger und/oder die Richtung der Tischoberfläche (27) der Aufgabevorrichtung im Übergangsbereich zwischen demselben und den Fingern unter einem Winkel ausgerichtet sind.

5. Anordnung nach einem der vorangehenden Ansprüche, dadurch gekennzeichnet, daß der Trenntisch im Bereich unterhalb der Finger (22) der Aufgabevorrichtung mit stoßabsorbierendem Material (17) versehen ist, damit zerbrechliche Artikel, z.B. Glasflaschen, nicht beim Auftreffen auf den Trenntisch beschädigt werden.

6. Anordnung nach einem der vorangehenden Ansprüche, dadurch gekennzeichnet, daß die freien Enden der langen Finger (22) oberhalb des Übergangs (13) zwischen dem unteren Teil (11) und dem oberen Teil (12) des Tisches angeordnet sind.

**Revendications**

1. Dispositif de séparation de déchets du type comprenant des particules différentes en taille, en résistance mécanique, en densité, en élasticité, etc, dans lequel le dispositif comprend une table de séparation (10) avec une partie inférieure (11) et une partie supérieure (12) disposées à un certain angle par rapport à l'horizontale, et dans lequel la partie supérieure forme un angle plus petit par rapport à l'horizontale que la partie inférieure, dans lequel la table de séparation dans son ensemble ou des segments longitudinaux dans celle-ci décrivent des mouvements de rotation mais conservent en grande partie l'orientation par rapport à l'horizontale et dans lequel le dispositif comprend une table d'alimentation (20) adaptée en tant que table vibrante, caractérisé en ce que la table d'alimentation est équipée dans sa partie de sortie (21) de doigts (22) orientés principalement dans le sens du mouvement des produits qui délimitent entre eux des espaces (23), et en ce qu'au moins une partie des espaces sont situés au dessus de la partie inférieure (11) de la table, les produits de dimensions plus petites que la largeur d'un espace passant dans les espaces et étant chargés sur la partie inférieure (11) et les produits de dimensions plus grandes que la largeur d'un espace étant chargés sur la partie supérieure (12).

2. Dispositif selon la revendication 1, caractérisé en ce que la largeur des espaces est plus grande dans la partie avoisinant l'extrémité de la partie de sortie (21) que dans la région la plus proche de la partie d'entrée (26) de la table d'alimentation.

3. Dispositif selon la revendication 1 ou 2, caractérisé en ce que les doigts (22) sont répartis en doigts courts (22a) et en doigts longs (22b) et en ce que les doigts courts sont placés entre les doigts longs (22b) dans la région la plus proche de la partie d'entrée (26) de la table d'alimentation.

4. Dispositif selon l'une quelconque des revendications précédentes, caractérisé en ce que dans la région avoisinant l'extrémité de la partie de sortie (21) au moins certains des doigts (22) sont dirigés selon un certain angle par rapport à la direction des doigts et/ou par rapport à la direction de la surface de table (27) de la table d'alimentation dans la région de transition entre elle-même et les doigts.

5. Dispositif selon l'une quelconque des revendications précédentes, caractérisé en ce que la table de séparation dans la région au dessous des doigts (22) de la table d'alimentation est équipée avec un matériau absorbant les chocs (17) de manière à éviter que les produits fragiles, par exemple des bouteilles de verre, ne soient endommagés lors de l'impact avec la table de séparation.

6. Dispositif selon l'une quelconque des revendications précédentes, caractérisé en ce que les extrémités libres des doigts longs (22) sont situées au dessus de la région de transition (13) entre la partie inférieure (11) et la partie supérieure (12) de la table.

## Fig.1

## Fig.2

## Fig.2c

## Fig.2a

## Fig.2b

## Fig.3

## Fig.4